# EUROPÄISCHE PATENTSCHRIFT

(11) **EP 2 095 155 B1**
(45) Veröffentlichungstag und Bekanntmachung des Hinweises auf die Patenterteilung: **13.04.2016**
(21) Anmeldenummer: 07846827.9
(22) Anmeldetag: 27.11.2007
(51) Int. Cl.: G01V 3/15, E02F 9/24

(54) **LOKALISIERUNGSSYSTEM FÜR EINE GELÄNDEBEARBEITUNGSMASCHINE**
LOCALIZATION SYSTEM FOR AN EARTH MOVING MACHINE
SYSTÈME DE LOCALISATION POUR ENGIN DE TERRASSEMENT

(30) Priorität: 01.12.2006 CH 1952006
(43) Veröffentlichungstag der Anmeldung: 02.09.2009
(73) Patentinhaber: Leica Geosystems AG, 9435 Heerbrugg (CH)
(72) Erfinder: FLING, Richard, Barton Under Needwood Staffordshire DE13 8ET (GB); BRANSON, Simon, Whiston Staffordshire ST10 2HZ (GB)
(74) Vertreter: Kaminski Harmann
(86) Internationale Anmeldenummer: PCT/EP2007/010262
(87) Internationale Veröffentlichungsnummer: WO 2008/064851

(56) Entgegenhaltungen:
- EP-A- 0 490 855
- US-A- 5 015 847
- US-A1- 2002 047 709

## Beschreibung

Die Erfindung betrifft ein Lokalisierungssystem zum Lokalisieren eines unterirdischen Objektes für eine Geländebearbeitungsmaschine, nach dem Oberbegriff des Anspruchs 1.

Bei der Durchführung von Erdarbeiten und vor allem von Grabarbeiten ist es notwendig zu wissen, wo unterirdische Objekte, wie unterirdisch verlegte Versorgungsleitungen, vergraben sind, um eine Beschädigung z.B. der Versorgungsleitungen und/oder der verwendeten Geländebearbeitungsmaschinen zu verhindern. Oft sind diese Objekte unvollständig, falsch oder gar nicht dokumentiert. Demzufolge muss das zu bearbeitende Gelände vor Beginn der Erdarbeiten auf unterirdische Objekte untersucht werden. Die Untersuchung erfolgt im Allgemeinen anhand einer Detektion von den Objekten zuordenbaren elektromagnetischen Feldern, beispielsweise mit handelsüblichen handgehaltenen Ortungsgeräten.

Eine solche Gelände-Abtastung ist aber insbesondere für die Bearbeitung grosser Flächen zu zeit- und kostenaufwändig. Daher ist es üblich, Lokalisierungs- oder Ortungsgeräte, wie Kabeldetektoren, direkt an der Geländebearbeitungsmaschine - z.B. einem Bagger - anzubringen und die vergrabenen Objekte im Rahmen der laufenden Erdarbeiten zu erfassen. Um mit grosser Sicherheit zu vermeiden, dass die Objekte beim Graben getroffen werden, werden vorteilhaft Ortungsgeräte verwendet, mittels welchen auch die Tiefe der vergrabenen Objekte bestimmbar ist. Dazu sind Ortungsgeräte bekannt, die zwei entlang einer Senkrechten auf das Objekt beabstandet angeordnete Antennen aufweisen. Aus den mittels der Antennen erfassten Feld-Verhältnissen und dem bekannten festen Abstand der Antennen ist der Abstand des Objektes zum Ortungsgerät ableitbar. Vorteilhaft werden die Objekt-Daten abgespeichert und aufgezeichnet, womit Gelände-Dokumentationen, wie Karten, erstellt bzw. ergänzt werden können.

In der US 6,633,163 ist eine Geländebearbeitungsmaschine mit zwei an der Maschine unterschiedlich hoch angeordneten Magnetfeld-Detektoren dargestellt. Der Vergleich der Detektor-Messungen liefert Informationen über die Nähe eines Feld-Erzeugers zur Geländebearbeitungsmaschine. Mit dem dargestellten System wird die relative Position des Feld-Erzeugers zur Geländebearbeitungsmaschine bestimmt. Die Bestimmung des Abstandes des Feld-Erzeugers zur Geländebearbeitungsmaschine bzw. der Tiefe des Feld-Erzeugers wird in der genannten US-Patentschrift nicht erwähnt. Weiters ist - aufgrund der Anordnung der Detektoren direkt an der Maschine - das System nur für Geländebearbeitungsmaschinen gut geeignet, die ein Arbeitsteil hinter sich herziehen.

Die US 5,592,092 beschreibt zwei an der Schaufel eines Baggers beabstandet angebrachte Sensoren zur Erfassung von Magnetfeldern unterirdischer Objekte. Aus dem bekannten Abstand der Sensoren zueinander, der Differenz der detektierten Feldbeträge und der Schaufelstellung wird der Abstand der Schaufel zum Objekt abgeleitet. Da die Sensoren an der Baggerschaufel angebracht sind, liegen sie je nach Schaufelstellung nicht senkrecht über dem Objekt. Daher muss die Schaufelstellung bei der Bestimmung des Abstands berücksichtigt werden. Auch besteht - aufgrund der Befestigung direkt an der Schaufel - die Gefahr, dass die Sensoren bei den Baggerarbeiten beschädigt werden.

EP 0,490,855 beschreibt ein an der Baggerarm bewegbar angebrachter Sensor zur Erfassung von Magnetfeldern unterirdischer Objekte der während des Betriebs in Richtung des Objektes ausgerichtet werden kann.

Eine Aufgabe der Erfindung ist es, ein beschädigungsstabiles Lokalisierungssystem für eine Geländebearbeitungsmaschine bereitzustellen, mittels welchem bei der Durchführung von Erdarbeiten unterirdische Objekte erfassbar sind.

Eine weitere Aufgabe ist die Bereitstellung eines beschädigungsstabilen Lokalisierungssystems für eine Geländebearbeitungsmaschine, mittels welchem auch der Abstand zu unterirdischen Objekten bestimmbar ist.

Diese Aufgaben werden durch die Gegenstände des Anspruches 1 oder der abhängigen Ansprüche gelöst bzw. die Lösungen weitergebildet.

Erfindungsgemäss weist ein Lokalisierungssystem für eine Geländebearbeitungsmaschine eine pendelartig an einer Befestigungskomponente angeordnete Detektorkomponente auf. Die Befestigungskomponente ist zur Anordnung, insbesondere lösbaren Befestigung, am Arbeitsteil, wie dem Baggerarm, der Geländebearbeitungsmaschine ausgeführt. Vorteilhaft ist die Befestigungskomponente derart am Arbeitsteil anordenbar, dass die Detektorkomponente möglichst beschädigungssicher positioniert wird. Durch die pendelartige Anordnung der Detektorkomponente an der Befestigungskomponente erfolgt eine Ausrichtung der Detektorkomponente unter Wirkung der Schwerkraft für unterschiedliche Stellungen des Arbeitsteils. Damit wird mit einer wenig komplexen und beschädigungsstabilen Anordnung ein Lokalisierungssystem mit einer vertikal ausgerichteten Detektorkomponente bereitgestellt.

Damit ist beispielsweise vorteilhaft eine Detektorkomponente mit einem Aufbau geringer Komplexität - beispielsweise eine Detektorkomponente mit zwei auf einer Achse entlang der vertikalen Ausrichtung beabstandet angeordneten Antennen - einsetzbar, anhand welcher der Abstand eines Objektes zur Detektorkomponente bestimmbar ist, ohne dass zusätzliche Sensoren und komplexe Datenauswerte-Algorithmen erforderlich sind.

Die pendelartige Anordnung der Detektorkomponente an der Befestigungskomponente kann auf unterschiedliche Art und Weise realisiert werden. Beispielsweise ist die Detektorkomponente über ein flexibles Verbindungselement an der Befestigungskomponente - die z.B. einfach eine Halteplatte darstellt - angebracht. Das flexible Verbindungselement ist z.B. aus Gummi oder weichem Kunststoff hergestellt und mit der Detektor- und der Befestigungskomponente verbunden, beispielsweise anhand einer Schraub-, Steck- oder Klebeverbindung. Je nach Gewicht der Detektorkomponente wird das Verbindungselement mehr oder weniger flexibel derart ausgeführt, dass bei über das Verbindungselement an der Befestigungskomponente angeordneter Detektorkomponente eine schwerkraftbeeinflusste Ausrichtung derselben erfolgt.

Die Ausführung der pendelartigen Anordnung kann auch mit einer rahmenartigen Konstruktion erfolgen. So ist die Detektorkomponente als Pendelkörper in einem Rahmen - beispielsweise in eine oder zwei Richtungen schwingbar - aufhängbar. Der Rahmen kann auch als Kardanring bzw. -ringe für eine kardanische Aufhängung der Detektorkomponente ausgebildet sein. Der Rahmen kann an der Befestigungskomponente angebracht sein oder die Befestigungskomponente darstellen. Beispielsweise ist ein die Befestigungskomponente bildender Rahmen magnetisch am Arbeitsteil befestigbar.

Für eine pendelartige Lagerung der Detektorkomponente kann die Befestigungskomponente auch eine entsprechende Aufnahme aufweisen, in welcher die Detektorkomponente gelagert ist, beispielsweise über ein oder zwei Lager, wie Kugellager oder ein Kugelgelenk mit z.B. zwei rotatorischen Freiheitsgraden.

Durch die erfindungsgemässe Anordnung der Detektorkomponente erfolgt - sozusagen selbsttätig - eine vertikale Ausrichtung derselben, womit ohne zusätzliche Messungen ein erster Messparameter festgelegt ist. Die Detektorkomponente weist beispielsweise - wie vorgängig erwähnt - eine erste und zweite Antenne auf, welche Antennen in einem festen Abstand zueinander angeordnet sind, wobei bei schwerkraftbeeinflusst ausgerichteter Detektorkomponente die Antennen gegenüber einem Terrain derart angeordnet sind, sodass die erste Antenne einen ersten Abstand und die zweite Antenne einen zweiten Abstand zum Terrain einnimmt, wobei der erste Abstand kleiner ist als der zweite Abstand - die erste Antenne ein von einem unterirdischen Objekt ausgehendes Feld also stärker wahrnimmt als die zweite Antenne. Aus dem Verhältnis der Antennen-Messungen kann dann auf einfache Art und Weise der Abstand zum Objekt ermittelt werden.

Den Objekten zuordenbare elektromagnetische Felder sind z.B. durch Wechselströme erzeugte Magnetfelder oder induzierte Magnetfelder. So können unterirdisch verlegte Versorgungsleitungen, wie Hoch- und Niederspannungsleitungen, Fernmeldeleitungen oder Wasserleitungen, bzw. alternative unterirdische Objekte oft anhand von zeitlich veränderlichen Magnetfeldern der Leitungen geortet werden. Die Magnetfelder werden beispielsweise infolge von Stromflüssen durch die Leitungen erzeugt, wie bei mit Wechselstrom betriebenen Hoch- oder Niederspannungsleitungen. Alternativ stellen die Felder mittels Anlegen elektromagnetischer Signale an die Leitungen erzeugte Felder oder an den Leitungen reflektierte Felder dar. Das Anlegen erfolgt über direktes Anlegen an Strom leitende Versorgungsleitungen oder mittels Induzieren eines Magnetfeldes in der Leitung. Ein magnetisches Wechselfeld einer Strom leitenden Versorgungsleitung kann auch durch Signale von entfernten Transmittern, wie Funksignale von Radiotransmittern, induziert sein. Auch können die Felder von Transmittern an oder in den Leitungen ausgehen. Beispielsweise wird in nicht-leitende Versorgungsleitungen, wie tönerne Rohre oder Kunststoffrohre, ein Leiter eingeführt - oder es wird der Leiter neben den Versorgungsleitungen geführt - und mit Wechselstrom gespeist.

Die Stärke des Magnetfeldes ist ein Mass für den Abstand der Quelle - also der Leitung oder des Transmitters - zum Messort. Für einen geraden stromdurchflossenen Leiter nimmt die Stärke des Magnetfeldes umgekehrt proportional mit dem Abstand d ab - B ~ k/d, im Falle eines magnetischen Dipolfeldes umgekehrt proportional mit der dritten Potenz des Abstandes d - B ~ k/d³, wobei k eine Proportionalitätskonstante bezeichnet und B den Betrag des Magnetfeldes.

Mittels einer Detektorkomponente mit beabstandeten Antennen, wie vorgängig beschrieben, wird ein Magnetfeld einer Quelle an zwei beabstandeten Messpositionen, also für zwei Abstände zur Quelle, erfasst. Anschliessend kann das Verhältnis der gemessenen Stärken der Felder gebildet werden, sodass sich die Proportionalitätskonstante herauskürzt. Aus den gemessenen Feldern und dem bekannten Relativabstand der Antennen ist dann der Abstand zur Quelle bestimmbar.

Eine Detektorkomponente eines erfindungsgemässen Lokalisierungssystems mit drei - oder mehr - Antennen ermöglicht die Ermittlung des Abstands eines Objektes mit grösserer Genauigkeit als eine Detektorkomponente mit zwei Antennen.

Weist die Detektorkomponente Antennen zum Erfassen des Feldes auf, so können die Antennen ein- zwei- oder dreiachsige Antennen darstellen. Anhand mehrachsiger Antennen ist das Feld in mehreren Raumrichtungen erfassbar, sodass nicht nur der Abstand sondern auch ein Richtungsvektor zu einem Objekt bestimmt werden kann.

Die Detektorkomponente des erfindungsgemässen Lokalisierungssystems kann ebenso alternativ zu den Antennen Magnetfeld-Detektoren, wie Magnetometer oder Hall-Sensoren, umfassen.

Die Detektorkomponente kann auch mit einem Sender und Empfänger, insbesondere für Entfernungsmessungen, ausgebildet sein.

Beispielsweise stellt die Detektorkomponente ein Radar dar, wobei die Objekte anhand von einer Sendeeinheit der Detektorkomponente ausgesandter und einer Empfangseinheit der Detektorkomponente empfangener Strahlung detektiert werden.

Gegebenenfalls umfasst die Detektorkomponente zusätzlich einen Laserdistanzmesser, ein GPS System oder andere optische Vermessungssysteme um die Distanz zum - ursprünglichen oder bearbeiteten - Terrain zu messen. Ist anhand der Detektorkomponente der Abstand zu einem Objekt bestimmbar, so kann die Messung der Position der Detektorkomponente respektive des Arbeitsteils relativ zum Terrain verwendet werden, um die Tiefe des Objektes zu bestimmen. Das Arbeitsteil kann dann entsprechend der ermittelten Tiefe gesteuert werden.

Eine Positionsbestimmung des Arbeitsteils ist auch mit alternativen, in der Maschinensteuerung üblichen, Methoden durchführbar. Bekannt ist beispielsweise, einen Reflektor am Arbeitsteil zu vermessen. Ebenfalls bekannt ist eine Positionsbestimmung - z.B. eines Baggerarms als Arbeitsteil - mittels Neigungs- und Drucksensoren.

Das erfindungsgemässe Lokalisierungssystem ist als Lokalisierungssystem für eine Geländebearbeitungsmaschine ausgebildet. Die Geländebearbeitungsmaschine stellt insbesondere einen Bagger mit einem Baggerarm als Arbeitsteil dar. Üblicherweise ist ein Baggerarm aus einer ersten und zweiten Auslegerkomponente und einer Baggerschaufel, die jeweils höhenverstellbar sind, gebildet. An einem solchen Baggerarm wird die Befestigungskomponente eines erfindungsgemässen Lokalisierungssystems vorzugsweise an der zweiten Auslegerkomponente derart angebracht, dass sie möglichst nahe an der Schaufel angeordnet ist, aber in keiner Stellung des Baggerarms von der Schaufel getroffen wird.

Die Befestigungskomponente ist beispielsweise als Metallplatte ausgebildet und magnetisch am Arbeitsteil befestigbar. Alternativ kann die Befestigungskomponente - wie vorgängig erwähnt - als rahmenartige Halterung ausgebildet sein. Im einfachsten Fall stellt die Befestigungskomponente ein Seil oder Band dar, das am Arbeitsteil angeordnet - beispielsweise um den Baggerarm gebunden und fixiert - werden kann, und an welchem die Detektorkomponente aufgehängt oder eingeschlauft wird bzw. ist. Eine Ausbildung der Befestigungskomponente als Gehäuse ist nützlich für z.B. Batterien, oder Werkzeuge zum Montieren der Befestigungs- und/oder Detektorkomponente. Umfasst das erfindungsgemässe Lokalisierungssystem eine Rechenkomponente, so ist diese vorteilhaft im Gehäuse unterbringbar.

Die Anordnung am Arbeitsteil kann auf verschiedene Art und Weise erfolgen. Die Befestigungskomponente kann am Arbeitsteil lösbar befestigt werden - beispielsweise magnetisch, indem die Befestigungskomponente mit Magnetelementen ausgebildet wird. Ebenso kann die Befestigungskomponente am Arbeitsteil fixiert, z.B. mittels Kleben oder Schweissen, werden - beispielsweise stellt die Befestigungskomponente eine unauffällige, am Arbeitsteil fix angebrachte Trageplatte dar, an der die Detektorkomponente, gegebenenfalls über ein Verbindungselement oder mehrere Verbindungselemente, anordenbar ist. Die Anordnung der Befestigungskomponente am Arbeitsteil und/oder der Detektorkomponente an der Befestigungskomponente ist auch durch Auf- bzw. Anhängen, Schraub-, Schnapp-, Rast- Klick- oder Klemmverschlüsse realisierbar.

Das erfindungsgemässe Lokalisierungssystem umfasst weiters eine Anzeigekomponente zum Anzeigen der Detektion der Detektorkomponente. Stellt die Detektion lediglich ein Erfassen eines elektromagnetischen Feldes dar, so kann die Anzeigekomponente beim Erfassen ein Warnsignal erzeugen. Das Warnsignal ist beispielsweise ein akustisches der optisches Signal für einen Benutzer, wie einen Baggerfahrer. Zusätzlich oder alternativ kann das Warnsignal ein Signal für eine Steuereinrichtung der Geländebearbeitungsmaschine darstellen, wodurch z.B. die Bewegung der Maschine und/oder deren Arbeitsteils gestoppt wird.

Gegebenenfalls umfasst das erfindungsgemässe Lokalisierungssystem eine Rechenkomponente. Mittels der Rechenkomponente wird die Detektion der Detektorkomponente weiterverarbeitet. Beispielsweise wird aus der Detektion der Abstand zum Objekt abgeleitet und gegebenenfalls abgespeichert. Die Rechenkomponente kann über entsprechende Schnittstellen mit der Anzeigekomponente kommunizieren, welche dann die mittels der Rechenkomponente abgeleiten Informationen, wie Abstandsinformationen, anzeigt bzw. weiterleitet.

Zur Anzeige für einen Benutzer ist die Anzeigekomponente z.B. als graphisches Display ausgebildet und in einer Fahrerkabine angeordnet. Auf dem Display ist die Detektion als Warnsignal, beispielsweise mittels blinkender bzw. leuchtender Lampen, darstellbar. Die Abstandsinformation kann bildlich in einem Geländemodell, mit Anzeigelampen oder als Zahlenwerte dargestellt werden. Zusätzlich oder alternativ kann ein akustischer Alarm vorgesehen sein.

Die Rechenkomponente ist z.B. ein Mikroprozessor. Weiters kann der Rechen- oder Anzeigekomponente ein Controller zugeordnet sein.

Detektorkomponente, Anzeigekomponente, sowie gegebenenfalls Rechenkomponente und gegebenenfalls Controller weisen jeweils Einrichtungen zur Kommunikation auf. Die Einrichtungen können Kabelverbindungen oder kabellose Schnittstellen, wie Bluetooth oder CANBUS, darstellen. Beispielsweise kommunizieren die Komponenten auch über Funk-Signale. Die Kommunikation erfolgt unter den einzelnen Komponenten. Die Kommunikation kann weiters zu externen Einrichtungen, wie einem von einem Benutzer bedienten Steuersystem, oder zu Steuereinrichtungen der Geländebearbeitungsmaschine erfolgen.

Das erfindungsgemässe Lokalisierungssystem wird nachfolgend anhand von in den Zeichnungen schematisch dargestellten Ausführungsbeispielen rein beispielhaft näher beschrieben oder erläutert. Im Einzelnen zeigen
- Figur 1: einen Bagger als Geländebearbeitungsmaschine mit einem erfindungsgemässen Lokalisierungssystem;
- Figur 2: einen Bagger als Geländebearbeitungsmaschine mit Komponenten eines erfindungsgemässen Lokalisierungssystems;
- Figur 3: eine Ausführungsform für die pendelartige Anordnung einer Detektorkomponente an einer Befestigungskomponente eines erfindungsgemässen Lokalisierungssystems;
- Figur 4: Komponenten eines erfindungemässen Lokalisierungssystems an einem Baggerarm;
- Figur 5: einen Bagger mit einer Befestigungs-, Verbindungs- und Detektorkomponente eines erfindungsgemässe Lokalisierungssystems;
- Figur 6: ein weiteres Ausführungsbeispiel eines erfindungsgemässen Lokalisierungssystems;
- Figur 7: in sechs Teilfiguren Ausführungsbeispiele betreffend Komponenten eines erfindungsgemässen Lokalisierungssystems; und
- Figur 8: ein Ausführungsbeispiel für eine Anzeigekomponente eines erfindungsgemässen Lokalisierungssystems.

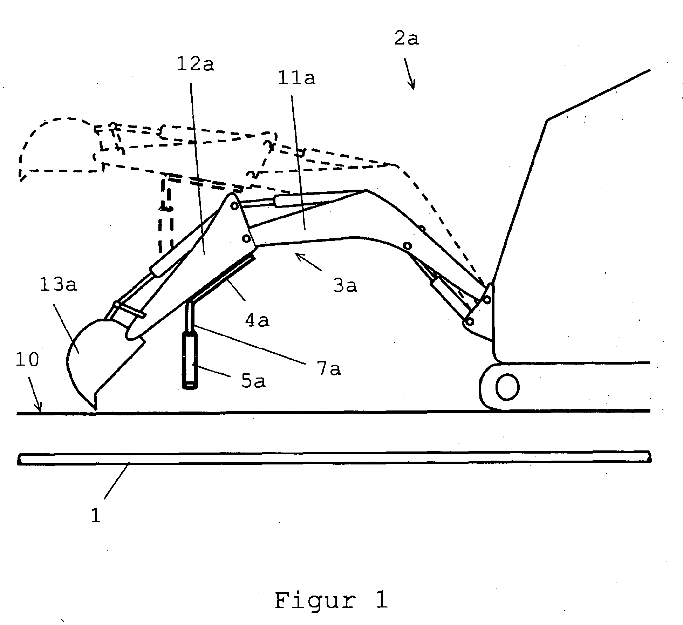

In Figur 1 ist ein Bagger 2a als Geländebearbeitungsmaschine mit einem erfindungsgemässen Lokalisierungssystem dargestellt. Der Bagger 2a fährt über ein Terrain 10, an welchem Grabarbeiten durchgeführt werden sollen. Die Grabarbeiten erfolgen z.B. im Rahmen der Erstellung einer Strasse oder der Verlegung von Leitungen bzw. Rohren. Unter dem zu bearbeitenden Terrain ist bereits eine Versorgungsleitung 1 als unterirdisches Objekt verlegt, wobei von der Versorgungsleitung 1 ein elektromagnetisches Feld ausgeht. Der Bagger 2a weist als Arbeitsteil einen Baggerarm 3a mit einer ersten Auslegerkomponente 11a, einer zweiten Auslegerkomponente 12a und einer Baggerschaufel 13a, die jeweils mittels hydraulischer Zylinder höhenverstellbar sind, auf. An der zweiten Auslegerkomponente 12a sind als Komponenten des erfindungsgemässen Lokalisierungssystems eine Befestigungskomponente 4a, die hier als magnetisch an der zweiten Auslegerkomponente befestigtes Gehäuse für eine - nicht gezeigte - Anzeigekomponente des Lokalisierungssystems ausgebildet ist, sowie ein flexibles Verbindungselement 7a und eine Detektorkomponente 5a angeordnet. Die Detektorkomponente 5a ist mittelbar über das flexible Verbindungselement 7a an der Befestigungskomponente 4a derart angeordnet, dass sie in der Horizontalebene pendelartig schwingen kann. Da das Verbindungselement 7a flexibel ausgebildet ist, erfolg eine Ausrichtung der Detektorkomponente 5a unter Wirkung der Schwerkraft. Dadurch richtet sich hier die Detektorkomponente 5a in den verschiedenen Stellungen des Baggerarms 3a - eine zweite Stellung ist mit gestrichelten Linien eingezeichnet - senkrecht auf das Terrain 10 und die Versorgungsleitung 1 aus. Die Detektorkomponente 5a ist zur Detektion elektromagnetischer Strahlung ausgebildet. Sobald Strahlung detektiert wird, wird dies mittels der in der - als Gehäuse ausgebildeten - Befestigungskomponente 4a angeordneten Anzeigekomponente an eine Steuereinrichtung des Baggers 2a weitergeleitet. Das Weiterleiten erfolgt über Funk - z.B. über Bluetooth-Schnittstellen. Anzeigekomponente und Detektorkomponente 5a könnten auch in einem gemeinsamen Gehäuse angeordnet sein - beispielsweise auf einer Leiterplatte angebracht.

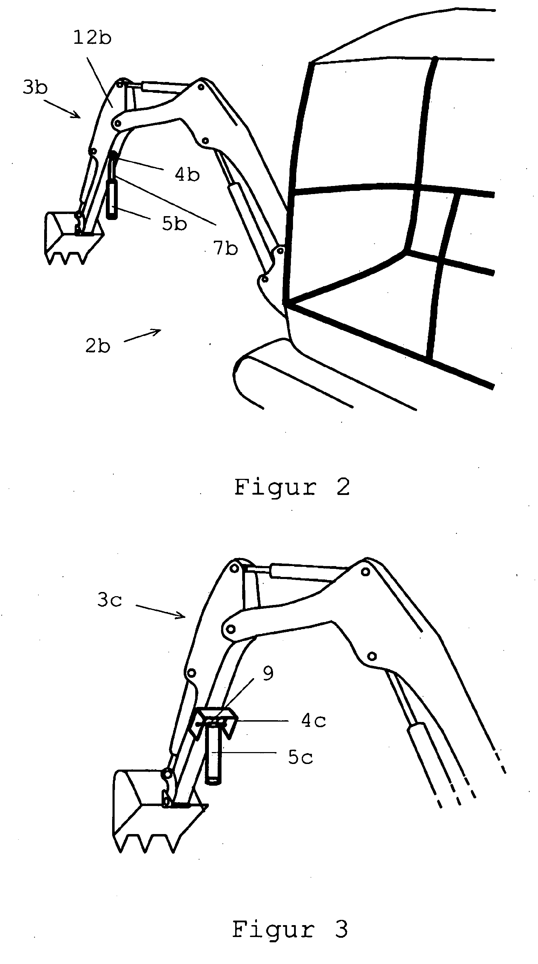

In Figur 2 ist wiederum ein Bagger 2b als Geländebearbeitungsmaschine mit Komponenten eines erfindungsgemässen Lokalisierungssystems gezeigt. An einer runden Metallplatte 4b als Befestigungskomponente, die am zweiten Ausleger llb des Baggerarms 3b angeschweisst ist, ist - entsprechend Figur 1 - über ein flexibles Verbindungselement 7b eine Detektorkomponete 5b pendelartig angeordnet. Die Anzeigekomponente des Lokalisierungssystems ist nicht dargestellt.

Figur 3 zeigt eine weitere Alternative einer pendelartigen Anordnung einer Detektorkomponente 5c eines erfindungsgemässen Lokalisierungssystems an einer Befestigungskomponente desselben. Die Befestigungskomponente ist an einem Baggerarm 3c befestigt und als Rahmen 4c ausgebildet, in welchem die Detektorkomponente 5c um eine Achse 9 schwenkbar aufgehängt ist.

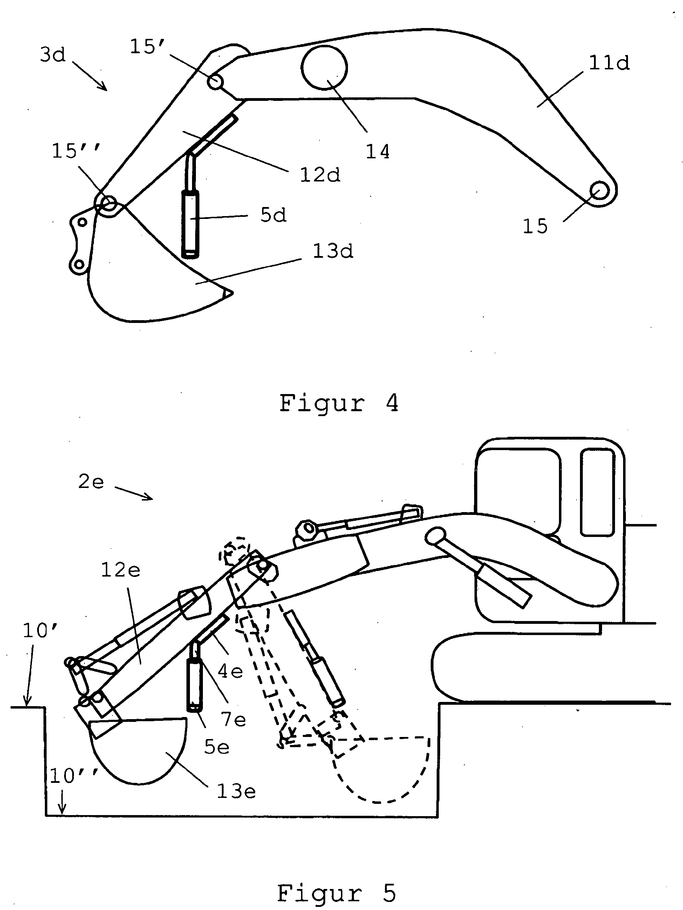

Die Darstellung der Figur 4 zeigt einen Baggerarm 3d mit Komponenten eines erfindungsgemässen Lokalisierungssystems. Aus der Darstellung wird ersichtlich, dass die Anordnung der Detektorkomponente 5d des Lokalisierungssystems derart erfolgt, dass diese möglichst nahe der Baggerschaufel 13d angeordnet ist, jedoch so weit entfernt, dass sie von der Schaufel nicht getroffen wird. Am Baggerarm 3d ist weiters ein reflektives Element 14 angebracht. Das reflektive Element 14 kann mit einem Tachymeter angemessen und so die Position des Elements bestimmt werden. Dem Baggerarm 3d sind weitere Sensoren zugeordnet: Den - nicht dargestellten - hydraulischen Zylindern zum Verstellen der ersten Auslegerkomponente 11d und der zweiten Auslegerkomponente 12d des Baggerarms 3d, sowie der Baggerschaufel 13d, sind jeweils Drucksensoren 15, 15' 15" zugeordnet. Weiters ist der ersten Auslegerkomponente 11d, der zweiten Auslegerkomponente 12d und der Baggerschaufel 13d jeweils ein Neigungssensor zugeordnet. Die Neigungssensoren sind nicht eingezeichnet. Mittels des reflektiven Elements 14 und der Sensoren kann die Position der Schaufel-Unterkante berechnet werden. Wird nun über das Lokalisierungssystem der Abstand zu einem unterirdischen Objekt ermittelt, kann mit der Kenntnis der Position des Baggerarms 3d - und damit der Detektorkomponente 5d, die in einer festen Positionsbeziehung zum Baggerarm 3d steht die Tiefe des Objektes bestimmt werden.

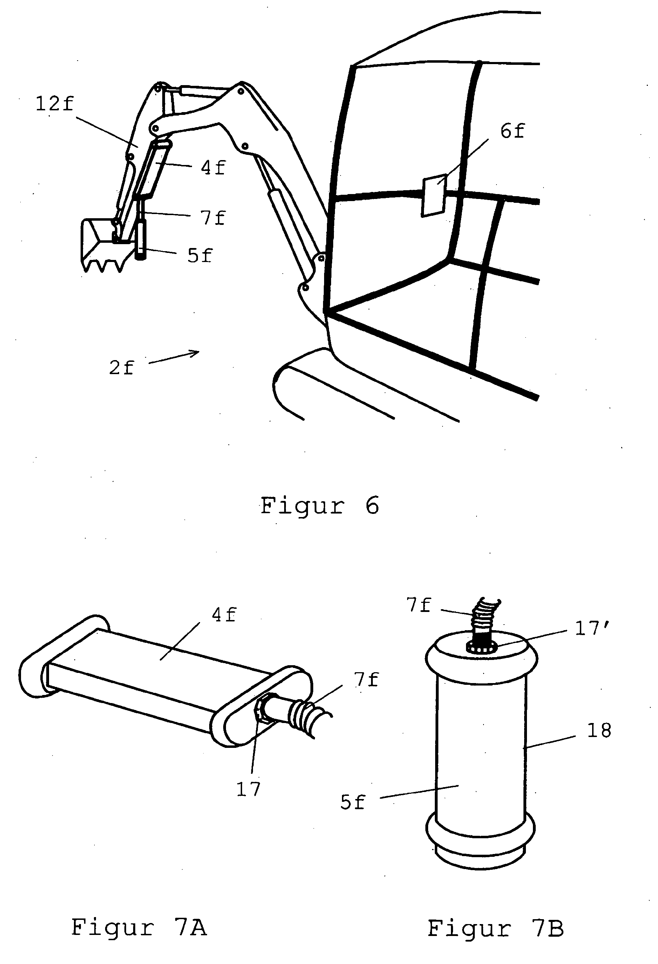

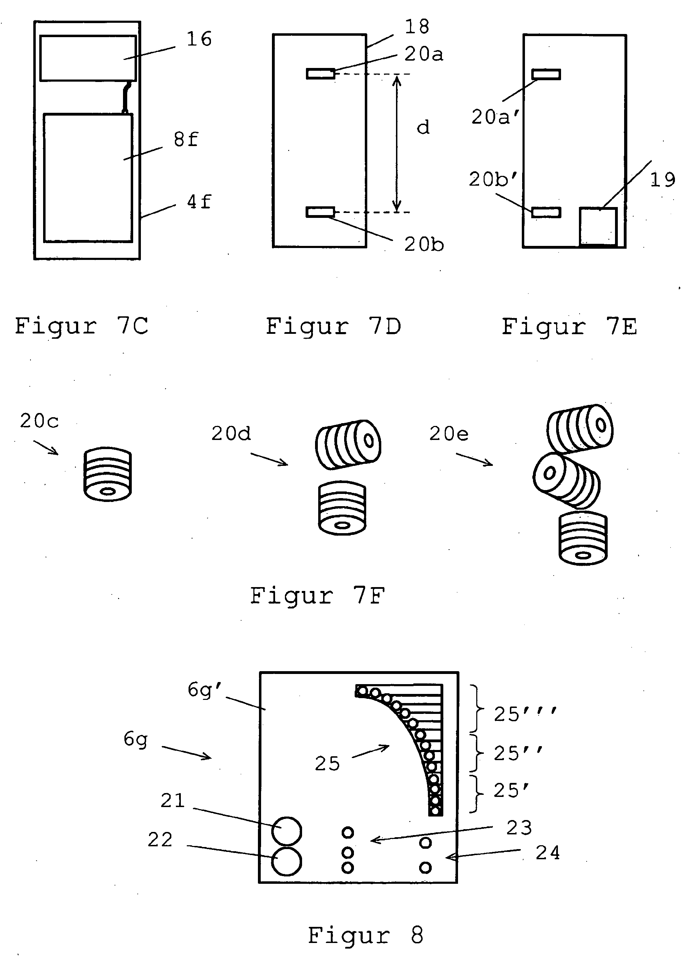

Mittels des Baggers in Figur 5 wird ein Aushub in einem Terrain 10' durchgeführt. Am Baggerarm ist an der Auslegerkomponente 12e, die mit der Schaufel 13e drehbar verbunden ist, über eine Befestigungskomponente 4e und eine Verbindungskomponente 7e eine Detektorkomponente 5e pendelartig angeordnet. Die Detektorkomponente 5e ist entsprechend der nachfolgenden Figur 7E mit Antennen und einem Laserdistanzmesser ausgeführt. Indem mit dem Laserdistanzmesser die Distanz zum Terrain - hier z.B. zum ausgehobenen Terrain 10" - gemessen wird, kann aus einem aus den Detektionsdaten der Detektorkomponente 5e berechneten Abstand eines erfassten Objektes auch die Tiefe des Objektes bestimmt werden. Aus der Darstellung geht hervor, dass die Anordnung der Detektorkomponente 5e über das Verbindungselement 7e und die Befestigungskomponente 4e an der Auslegerkomponente 12e derart ist, dass die Detektorkomponente 5e auch bei vollständig eingeklappter Schaufel 13e von dieser nicht getroffen wird - und damit gegen Beschädigung durch die Schaufel 13e geschützt ist. Beim Einziehen der Auslegerkomponente 12e - wie in der mit gestrichelten Linien gezeigten Stellung - liegt die Detektorkomponente auf der Auslegerkomponente auf. Beim Transport des Baggers - wenn der Bagger also nicht aktiv eingesetzt wird - kann die Detektorkomponente 5e und ggf. die weiteren Komponenten einfach abgenommen werden. Es ist auch möglich, eine Fixiereinrichtung für die Detektorkomponente 5e vorzusehen, sodass diese fixiert werden kann und nicht pendelt - z.B. beim Transport des Baggers oder auch, wenn das Terrain bzgl. unterirdischer Objekte bereits ausreichend genau dokumentiert ist.

Figur 6 zeigt ein Ausführungsbeispiel eines erfindungsgemässen Lokalisierungssystems mit einer als Gehäuse 4f für die Rechenkomponente ausgebildeten Befestigungskomponente. Am Gehäuse 4f ist über ein Verbindungselement 7f die Detektorkomponente 5f pendelartig angeordnet. Die Befestigungskomponente ist - entsprechend den vorherigen Figuren - an der vorderen Auslegerkomponente 12f eines Baggers 2f angebracht. Das Gehäuse 4f als Befestigungskomponente weist an der GehäuseRückwand Magnetstreifen auf, über welche es magnetisch an der vorderen Auslegerkomponente 12f befestigt ist. Die magnetische Befestigbarkeit ermöglicht eine schnelle und einfache Montage und Abnahme des Gehäuses 4f. In der Fahrerkabine des Baggers 2f ist eine Anzeigekomponente 6f, die ein graphisches Display umfasst, angeordnet. Die Anzeigekomponente 6f ist beispielsweise entsprechend dem nachfolgend in Figur 8 gezeigten Ausführungsbeispiel ausgebildet.

Die Figuren 7A-7F zeigen etwas detaillierter die Detektorkomponente 5f, das Verbindungselement 7f und die Befestigungskomponente aus Figur 6. Die Befestigungskomponente ist als Gehäuse 4f für ein Batteriefach 16, sowie eine Rechenkomponente 8f ausgebildet (siehe Figur 7C).

Das Verbindungselement 7f ist faltenbalgartig ausgebildet und besteht aus weichem Kunststoffmaterial. Das Verbindungselement 7f ist sowohl mit dem Gehäuse 18 der Detektorkomponente 5f als auch mit der Befestigungskomponente über Schraubmittel 17,17' fest verschraubt.

Die Detektorkomponente 5f weist eine erste Antenne 20a und eine zweite Antenne 20b auf, welche Antennen in einem bekannten Achsabstand d zueinander in einem Gehäuse 18 angeordnet sind (siehe Figur 7D). In Figur 7E ist ein Ausführungsbeispiel einer Detektorkomponente dargestellt, die ebenfalls eine erste und zweite, in einem festen Abstand zueinander angeordnete Antennen 20a' und 20b', sowie zusätzlich einen Laserdistanzmesser 19 aufweist. Die Antennen sind beispielsweise jeweils mit einer Spule bzw. mit mehreren Spulen als die einachsige Antenne 20c, die zweiachsige Antenne 20d oder die dreiachsige Antenne 20e aus Figur 7F ausgeführt. Ein zeitlich veränderliches Magnetfeld eines unterirdischen Leiters induziert eine Spannung zwischen den Enden der Spule bzw. der Spulen, der Antennen, welche induzierte Spannung vom Betrag des Magnetfeldes abhängt. Aus den Antennen-Ausgaben wird in der Rechenkomponente 8f ein Abstandswert des Leiters abgeleitet. Das Ableiten kann beispielsweise einfach ein Zuordnen eines Abstandswertes zu den Antennen-Ausgaben darstellen.

In Figur 8 ist ein Ausführungsbeispiel für eine Anzeigekomponente 6g eines erfindungsgemässen Lokalisierungssystems dargestellt. Die Anzeigekomponente 6g weist ein graphisches Display 6g' auf und ist als Anzeigeund Steuereinheit ausgebildet. Auf dem graphischen Display 6g' ist eine Vielzahl von LED's als visuelle Anzeigemittel, sowie mehrere Schaltknöpfe zum Wählen von Einstellungen ausgebildet. Die Schaltknöpfe umfassen hier eine "mute"-Schaltknopf 21 zum Stummstellen eines akustischen Alarms, der zusätzlich zu den visuellen Alarmsignalen vorgesehen ist. Mit einem weiteren Schaltknopf 22 kann das Lokalisierungssystem auf "stand by" oder "active" geschalten werden. Zu den Schaltknöpfen gehörige LED's 23 zeigen durch Aufleuchten an, welche Einstellung aktiv ist. Zwei weitere LED's 24 zeigen den Batteriestand der Rechenkomponente 8f und Detektorkomponente 5f, sowie des Displays 6g' an. Die LED's 25 im oberen Bereich des Displays 6g' stellen eine visuelle Anzeige von Abstandsinformation bzgl. eines detektierten unterirdischen Objekts dar. Sie sind in drei Farbabschnitte - grün, gelb, rot - unterteilt. Leuchten die grünen LED's 25', so ist ein unterirdisches Objekt detektiert, das sich jedoch noch in einem Abstand von mehr als 30 cm befindet. Das Aufleuchten der gelben LED's 25" indiziert, dass das Objekt nun einen Abstand von weniger als 30 cm einnimmt. Beim Leuchten der roten LED's 25"' ist das Objekt weniger als 10 cm entfernt und es herrscht höchste Alarmstufe.

## Patentansprüche

1. Lokalisierungssystem zum Lokalisieren eines unterirdischen Objektes (1), wie einer Versorgungsleitung, für eine Geländebearbeitungsmaschine (2a,2b), die ein Arbeitsteil (3a), insbesondere einen Baggerarm (3b,3c,3d), aufweist,
mit
▪ einer am Arbeitsteil (3a) anordenbaren Befestigungskomponente (4a,4b,4c,4e,4f),
▪ einer an der Befestigungskomponente (4a,4b,4c,4e,4f) mittel- oder unmittelbar angeordneten Detektorkomponente (5a,5b,5c,5d,5e,5f) zur Detektion des Objektes (1) anhand eines dem Objekt (1) zuordenbaren elektromagnetischen Feldes,
▪ gegebenenfalls einer Rechenkomponente (8f) zum Auswerten des Detektorsignals, insbesondere zum Ableiten und Speichern von Abstandsinformationen bezüglich des Objektes (1), und
▪ einer Anzeigekomponente (6f,6g), um das Detektiorsignal und/oder die Auswertungen des Detektorsignals, insbesondere die Abstandsinformationen, anzuzeigen bzw. weiterzuleiten,
**dadurch gekennzeichnet, dass**
die Detektorkomponente (5a,5b,5c,5d,5e,5f) pendelartig an der Befestigungskomponente (4a,4b,4c,4e,4f) angeordnet ist, sodass eine Ausrichtung der Detektorkomponente (5a,5b,5c, 5d,5e,5f) unter der Wirkung der Schwerkraft erfolgt.

2. Lokalisierungssystem nach Anspruch 1,
**dadurch gekennzeichnet, dass**
die Detektorkomponente (5e,5f) eine erste Antenne (20a,20a') und zweite Antenne (20b,20b') zum Erfassen des elektromagnetischen Feldes aufweist, welche Antennen in einem festen Abstand zueinander derart angeordnet sind, dass aus dem Verhältnis hinsichtlich der Stärken des mittels der ersten Antenne (20a,20a') und zweiten Antenne (20b,20b') erfassten Feldes der Abstand der Detektorkomponente (5e,5f) zum Objekt (1) ableitbar ist.

3. Lokalisierungssystem nach Anspruch 1 oder 2,
**dadurch gekennzeichnet, dass**
die Detektorkomponente (5a,5b,5d,5e,5f) über ein flexibles Verbindungselement (7a,7b,7f), beispielsweise aus Kunststoff- oder Gummimaterial, an der Befestigungskomponente (4a,4b,4d,4e,4f) angeordnet ist.

4. Lokalisierungssystem nach Anspruch 1 oder 2,
**dadurch gekennzeichnet, dass**
die Befestigungskomponente (4c) als Rahmen (4c) ausgebildet ist und die Detektorkomponente (5c) in dem Rahmen (4c) um eine Achse (9) schwenkbar angeordnet ist.

5. Lokalisierungssystem nach Anspruch 1 oder 2,
**dadurch gekennzeichnet, dass**
die Befestigungskomponente als Aufnahme ausgebildet ist und die Detektorkomponente in der Aufnahme gelenkig, insbesondere kugelgelenkig, gelagert ist.

6. Lokalisierungssystem nach einem der vorangehenden Ansprüche,
**dadurch gekennzeichnet, dass**
die Befestigungskomponente (4a,4f) magnetisch befestigbar ausgebildet ist.

7. Lokalisierungssystem nach einem der vorangehenden Ansprüche,
**dadurch gekennzeichnet, dass**
die Anzeigekomponente (6f,6g) die Detektion und/oder die Abstandsinformation
▪ einem Benutzer anzeigt und weiters oder alternativ
▪ an eine Steuereinrichtung der Geländebearbeitungsmaschine (2a,2b), beispielsweise eine Betätigungseinrichtung des Arbeitsteils (3a), weiterleitet.

8. Lokalisierungssystem nach einem der vorangehenden Ansprüche,
**dadurch gekennzeichnet, dass**
die Anzeigekomponente (6f,6g) ein graphisches Display (6g') aufweist.

9. Lokalisierungssystem nach einem der vorangehenden Ansprüche,
**dadurch gekennzeichnet, dass**
die Anzeigekomponente (6g)
▪ visuelle Anzeigemittel, wie LED's (25), und/oder
▪ akustische Anzeigemittel
aufweist.

10. Lokalisierungssystem nach einem der vorangehenden Ansprüche,
**dadurch gekennzeichnet, dass**
die Befestigungskomponente (4a,4f) als Gehäuse (4a,4f) für
- die Rechenkomponente (8f) und/oder
- die Anzeigekomponente
ausgebildet ist.

11. Lokalisierungssystem nach einem der vorangehenden Ansprüche,
**dadurch gekennzeichnet, dass**
ein Entfernungsmesser vorgesehen ist, welcher dem Lokalisierungssystem zugeordnet ist, und insbesondere an der Detektorkomponente (5e) angeordnet ist.

## Claims

1. Localization system for localizing an underground object (1) such as a supply line, for an earth-moving machine (2a, 2b) which has a working part (3a), in particular an excavator arm (3b, 3c, 3d), comprising
▪ a fastening component (4a, 4b, 4c, 4e, 4f) which can be arranged on the working part (3a),
▪ a detector component (5a, 5b, 5c, 5d, 5e, 5f) arranged indirectly or directly on the fastening component (4a, 4b, 4c, 4e, 4f) and intended for detecting the object (1) on the basis of an electromagnetic field which can be assigned to the object (1),
▪ optionally an arithmetic component (8f) for evaluating the detector signal, in particular for deriving and storing distance information with respect to the object (1), and
▪ a display component (6f, 6g) for displaying and forwarding, respectively, the detector signal and/or the evaluations of the detector signals, in particular the distance information,
**characterized in that** the detector component (5a, 5b, 5c, 5d, 5e, 5f) is arranged in a pendulum-like manner on the fastening component (4a, 4b, 4c, 4e, 4f) so that the detector component (5a, 5b, 5c, 5d, 5e, 5f) is aligned under the action of gravity.

2. Localization system according to Claim 1, **characterized in that** the detector component (5e, 5f) has a first antenna (20a, 20a') and second antenna (20b, 20b') for detecting the electromagnetic field, which antennae are arranged at a fixed distance relative to one another so that the distance from the detector component (5e, 5f) to the object (1) can be derived from the ratio of the strengths of the field detected by means of the first antenna (20a, 20a') and second antenna (20b, 20b').

3. Localization system according to Claim 1 or 2, **characterized in that** the detector component (5a, 5b, 5d, 5e, 5f) is arranged via a flexible connecting element (7a, 7b, 7f), for example comprising plastic or rubber material, on the fastening component (4a, 4b, 4d, 4e, 4f).

4. Localization system according to Claim 1 or 2, **characterized in that** the fastening component (4c) is in the form of a frame (4c) and the detector component (5c) is arranged in the frame (4c) so as to be pivotable about an axis (9).

5. Localization system according to Claim 1 or 2, **characterized in that** the fastening component is in the form of a receptacle and the detector component is mounted by means of a joint, in particular a ball joint, in the receptacle.

6. Localization system according to any of the preceding claims, **characterized in that** the fastening component (4a, 4f) is formed so as to be magnetically fastenable.

7. Localization system according to any of the preceding claims, **characterized in that** the display component (6f, 6g)
▪ displays the detection and/or the distance information to a user and furthermore or alternatively
▪ forwards the detection and/or the distance information to a control device of the earth-moving machine (2a, 2b), for example an actuating device of the working part (3a).

8. Localization system according to any of the preceding claims, **characterized in that** the display component (6f, 6g) has a graphic display (6g').

9. Localization system according to any of the preceding claims, **characterized in that** the display component (6g) has
▪ visual display means, such as LEDs (25), and/or
▪ acoustic display means.

10. Localization system according to any of the preceding claims, **characterized in that** the fastening component (4a, 4f) is in the form of a housing (4a, 4f) for
- the arithmetic component (8f) and/or
- the display component.

11. Localization system according to any of the preceding claims, **characterized in that** a rangefinder which is coordinated with the localization system and in particular is arranged on the detector component (5e) is provided.

## Revendications

1. Système de localisation pour localiser un objet souterrain (1) comme une conduite d'alimentation, pour un engin de terrassement (2a, 2b) qui présente une pièce de travail (3a), en particulier un bras de pelleteuse (3b, 3c, 3d), avec
• un composant de fixation (4a, 4b, 4c, 4e, 4f) qui peut être placé sur la pièce de travail (3a),
• un composant de détecteur (5a, 5b, 5c, 5d, 5e, 5f) placé directement ou indirectement sur le composant de fixation (4a, 4b, 4c, 4e, 4f) pour la détection de l'objet (1) à l'aide d'un champ électromagnétique qui peut être assigné à l'objet (1),
• le cas échéant un composant de calcul (8f) pour exploiter le signal du détecteur, en particulier pour dériver et mémoriser des informations de distance par rapport à l'objet (1) et
• un composant d'affichage (6f, 6g) pour afficher ou transmettre le signal de détecteur, en particulier les informations de distance,
**caractérisé en ce que** le composant de détecteur (5a, 5b, 5c, 5d, 5e, 5f) est placé à la manière d'un pendule sur le composant de fixation (4a, 4b, 4c, 4e, 4f) si bien qu'une orientation du composant de détecteur (5a, 5b, 5c, 5d, 5e, 5f) se fait sous l'effet de la gravité.

2. Système de localisation selon la revendication 1, **caractérisé en ce que** le composant de détecteur (5e, 5f) présente une première antenne (20a, 20a') et une seconde antenne (20b, 20b') pour détecter le champ électromagnétique, lesquelles antennes sont placées à une distance fixe l'une par rapport à l'autre de telle manière que la distance du composant de détecteur (5e, 5f) par rapport à l'objet (1) peut être dérivée du rapport des intensités du champ détecté au moyen de la première antenne (20a, 20a') et de la seconde antenne (20b, 20b').

3. Système de localisation selon la revendication 1 ou 2, **caractérisé en ce que** le composant de détecteur (5a, 5b, 5c, 5d, 5e, 5f) est placé sur le composant de fixation (4a, 4b, 4c, 4e, 4f) par un élément de raccord flexible (7a, 7b, 7f), par exemple en matière plastique ou en matière à base de caoutchouc.

4. Système de localisation selon la revendication 1 ou 2, **caractérisé en ce que** le composant de fixation (4c) est configuré comme un cadre (4c) et que le composant de détecteur (5c) est placé pivotant autour d'un axe (9) dans le cadre (4c).

5. Système de localisation selon la revendication 1 ou 2, **caractérisé en ce que** le composant de fixation est configuré comme un logement et que le composant de détecteur est positionné de manière articulée dans le logement, en particulier par une articulation à rotule.

6. Système de localisation selon l'une des revendications précédentes, **caractérisé en ce que** le composant de fixation (4a, 4f) est configuré pouvant être fixé magnétiquement.

7. Système de localisation selon l'une des revendications précédentes, **caractérisé en ce que** le composant d'affichage (6f, 6g) affiche la détection et/ou les informations de distance
• à un utilisateur et/ou en plus ou en alternative
• transmet à un dispositif de commande de l'engin de terrassement (2a, 2b), par exemple à un dispositif de confirmation de la pièce de travail (3a).

8. Système de localisation selon l'une des revendications précédentes, **caractérisé en ce que** le composant d'affichage (6f, 6g) présente un affichage graphique (6g').

9. Système de localisation selon l'une des revendications précédentes, **caractérisé en ce que** le composant d'affichage (6g) présente
• des moyens d'affichage visuels comme des LED (25) et/ou
• des moyens d'affichage acoustiques.

10. Système de localisation selon l'une des revendications précédentes, **caractérisé en ce que** le composant de fixation (4a, 4f) est configuré comme un boîtier (4a, 4f) pour
- le composant de calcul (8f) et/ou
- le composant d'affichage.

11. Système de localisation selon l'une des revendications précédentes, **caractérisé en ce qu'**il est prévu un télémètre qui est assigné au système de localisation et qui est placé en particulier sur le composant de détecteur (5e).
